# EUROPÄISCHE PATENTANMELDUNG

(11) **EP 3 575 636 A1**
(43) Veröffentlichungstag der Anmeldung: **04.12.2019**
(21) Anmeldenummer: 19177204.5
(22) Anmeldetag: 29.05.2019
(51) Int. Cl.: F16H 49/00

(54) **SPANNUNGSWELLENGETRIEBE**

(30) Priorität: 01.06.2018 LU 100819
(71) Anmelder: Ovalo GmbH, 65555 Limburg (DE)
(72) Erfinder:
(74) Vertreter: Hoffmann, Jürgen

(57) **Zusammenfassung**

Die Erfindung betrifft ein Spannungswellengetriebe, das als Ringgetriebe ausgebildet ist und das einen drehfest mit einem ersten Getriebeantrieb verbundenen Wellengenerator, einen radialflexiblen Flexspline sowie zwei mit dem Flexspline in Zahneingriff stehende Zahnräder unterschiedlicher Zähnezahl aufweist, wobei ein erstes der Zahnräder drehfest mit einem Getriebeabtrieb verbunden ist und ein zweites der Zahnräder drehfest mit einem zweiten Getriebeantrieb verbunden ist. Das Spannungswellengetriebe zeichnet sich dadurch aus, dass wenigstens ein erstes Verbindungsteil, das das erste Zahnrad mit dem Getriebeabtrieb verbindet, durch wenigstens einen Durchbruch in dem zweiten Zahnrad oder in einem zweiten Verbindungsteil, das das zweite Zahnrad mit dem zweiten Getriebeantrieb verbindet, oder in einem mit dem zweiten Zahnrad drehfest verbundenen Bauteil hindurch verläuft, oder dass wenigstens ein zweites Verbindungsteil, das das zweite Zahnrad mit dem zweiten Getriebeantrieb verbindet, durch wenigstens einen Durchbruch in dem ersten Zahnrad oder in einem ersten Verbindungsteil, das das erste Zahnrad mit dem zweiten Getriebeabtrieb verbindet, oder in einem mit dem ersten Zahnrad drehfest verbundenen Bauteil hindurch verläuft.

## Beschreibung

Die Erfindung betrifft ein Spannungswellengetriebe, das als Ringgetriebe ausgebildet ist und das einen drehfest mit einem ersten Getriebeantrieb verbundenen Wellengenerator, einen radialflexiblen Flexspline sowie zwei mit dem Flexspline in Zahneingriff stehende Zahnräder unterschiedlicher Zähnezahl aufweist, wobei ein erstes der Zahnräder drehfest mit einem Getriebeabtrieb verbunden ist und ein zweites der Zahnräder drehfest mit einem zweiten Getriebeantrieb verbunden ist.

Die Erfindung betrifft außerdem eine Verstellvorrichtung, insbesondere einen Nockenwellenversteller oder eine Verstellvorrichtung zum Einstellen des Expansionshubes oder des Verdichtungsverhältnisses eines Verbrennungsmotors, mit einem solchen Spannungswellengetriebe.

Spannungswellengetriebe der eingangs genannten Art können beispielsweise in Verstellvorrichtungen, wie beispielsweise Nockenwellenverstellern, zu Einsatz kommen. Allerdings sind die Einsatzmöglichkeiten durch die bauartbedingt zwingende Anordnung der Getriebebauteile begrenzt.

Aus DE 10 2010 006 392 B3 ist ein Nockenwellenversteller bekannt, der ein Spannungswellengetriebe beinhaltet. Das Spannungswellengetriebe hat wenigstens zwei Eingänge und einen Ausgang, dessen Bewegung aus der Überlagerung der Bewegungen der Eingänge resultiert, wobei einer der Eingänge zum Ausführen einer Hauptbewegung ausgebildet ist und der andere Eingang zum Ausführen einer Verstellbewegung dient, welche die Phasenlage des Ausgangs relativ gegenüber der Phasenlage des die Hauptbewegung ausführenden Eingangs verstellt. Der die Verstellbewegung ausführende Eingang ist gegen die Kraft wenigstens eines Rückstellelementes des Spannungswellengetriebes bewegbar. Das Rückstellelement ist als Schraubenfeder ausgebildet und radial innerhalb der Hohlräder des Spannungswellengetriebes angeordnet.

Aus EP 2 282 020 B1 ist ein Nockenwellenversteller zum Variieren der Phasenbeziehung zwischen einer Kurbelwelle und einer Nockenwelle in einem Verbrennungsmotor bekannt, der eine Harmonic-Drive-Getriebe-Einheit mit einem Circular Spline und einem Dynamic Spline, einem Flexspline, der in dem Circular Spline und dem Dynamic Spline angeordnet ist, einem Wellengenerator, der in dem Flexspline angeordnet ist, aufweist. Der Nockenwellenversteller weist außerdem einen Rotationsaktuator auf, der mit dem Wellengenerator verbunden ist. Der Nockenwellenversteller beinhaltet außerdem zumindest eine Feder, die mit dem Circular Spline und mit dem Dynamic Spline wirkverbunden ist, um den Nockenwellenversteller in eine Standard-Rotationsposition zu bewegen. Der Nockenwellenversteller beinhaltet außerdem ein Zahnrad, das mit der Kurbelwelle eines Verbrennungsmotors verbindbar ist. Ein Zahnrad-Gehäuse, das das Zahnrad trägt und das an der Harmonic-Drive-Getriebe-Einheit angebracht ist, ist mit einer ersten Lasche mit der Feder verbunden. Eine Nabe, die an der Harmonic-Drive-Getriebe-Einheit angebracht ist und mit einer Nockenwelle des Verbrennungsmotors verbindbar ist, ist mit einer zweiten Lasche der Feder verbunden. Die Feder ist räumlich zwischen der Harmonic-Drive-Getriebe-Einheit und der Nabe angeordnet, die mit einer Nockenwelle des Verbrennungsmotors verbindbar ist.

Aus EP 2 386 732 A1 ist ein Nockenwellenversteller bekannt, bei dem das Rückstellelement räumlich zwischen einem Spannungswellengetriebe und einer Abtriebswelle zur Ankopplung an eine Nockenwelle eines Verbrennungsmotors angeordnet ist.

Es ist daher die Aufgabe der vorliegenden Erfindung, ein Spannungswellengetriebe anzugeben, das vielseitig einsetzbar ist.

Die Aufgabe wird durch ein Spannungswellengetriebe gelöst, das dadurch gekennzeichnet ist, dass
a. wenigstens ein erstes Verbindungsteil, das das erste Zahnrad mit dem Getriebeabtrieb verbindet, durch wenigstens einen Durchbruch in dem zweiten Zahnrad oder in einem zweiten Verbindungsteil, das das zweite Zahnrad mit dem zweiten Getriebeantrieb verbindet, oder in einem mit dem zweiten Zahnrad drehfest verbundenen Bauteil hindurch verläuft, oder dass
b. wenigstens ein zweites Verbindungsteil, das das zweite Zahnrad mit dem zweiten Getriebeantrieb verbindet, durch wenigstens einen Durchbruch in dem ersten Zahnrad oder in einem ersten Verbindungsteil, das das erste Zahnrad mit dem zweiten Getriebeabtrieb verbindet, oder in einem mit dem ersten Zahnrad drehfest verbundenen Bauteil hindurch verläuft.

Die Erfindung hat den ganz besonderen Vorteil, dass es eine größere Anzahl von Möglichkeiten bietet, externe, an das Spannungswellengetriebe anzukoppelnde Bauteile, anzuordnen. Insbesondere ist es beispielsweise möglich Bauteile, die bei den aus dem Stand der Technik bekannten Spannungswellengetrieben zwingend auf einer Getriebeseite anzukoppeln sind, nun auf einer anderen Getriebeseite angeordnet werden können. Die Zahl der Einsatzmöglichkeiten ist daher vorteilhaft bei dem erfindungsgemäßen Spannungswellengetriebe viel höher, als bei den aus dem Stand der Technik bekannten Spannungswellengetrieben. Insbesondere bietet das erfindungsgemäße Spannungswellengetriebe die Möglichkeit, auch in bestehende Systeme, beispielsweise Nockenwellenantriebssysteme, integriert zu werden, ohne die Anordnung der übrigen Bauteile des Systems ändern oder wesentlich ändern zu müssen.

Der Durchbruch kann beispielsweise tunnelförmig, insbesondere als Langloch oder als gebogenes, Langloch ausgebildet sein. Es ist alternativ auch möglich, dass der Durchbruch als Nut realisiert ist. Insbesondere kann die Nut radial nach außen hin offen ausgebildet sein. Insbesondere kann der Durchbruch eine andere Form aufweisen als Verbindungsteil, das durch den Durchbruch hindurch ragt. Beispielsweise kann der Durchbruch als, insbesondere gebogenes, Langloch ausgebildet sein, während das durch den Durchbruch hindurch ragende Verbindungsteil im Querschnitt kreisrund ausgebildet sein kann.

Das Spannungswellengetriebe kann hinsichtlich der Ausrichtung des Durchbruchs und des durch den Durchbruch hindurch verlaufenden Verbindungsteils in unterschiedlicher Weise realisiert sein. Hierdurch ergibt sich insbesondere die Möglichkeit, die Konstruktion des Spannungswellengetriebes speziell an die jeweils vorliegenden Einbauverhältnisse anzupassen. Das Verbindungsteil kann insbesondere in Axialrichtung durch den Durchbruch hindurch verlaufen. Es ist alternativ beispielsweise auch möglich, dass das Verbindungsteil in Radialrichtung durch den Durchbruch hindurch verläuft oder dass das Verbindungsteil schräg (also sowohl mit einem Axialanteil und einem Radialanteil) durch den entsprechend ausgebildeten und ausgerichteten Durchbruch verläuft.

Ein als Ringgetriebe ausgebildetes Spannungswellengetriebe weist, insbesondere im Gegensatz zu einem Topf- oder Hutgetriebe, einen ringförmigen Flexspline auf. Insbesondere kann das Spannungswellengetriebe als Ringgetriebe ausgebildet sein, das die zwei mit dem Flexspline in Zahneingriff stehenden Zahnräder unterschiedlicher Zähnezahl aufweist. Bei einer besonders kompakt und robust ausbildbaren Ausführung weist der Flexspline eine Außenverzahnung auf, während die mit dem Flexspline in Zahneingriff stehenden Zahnräder als innenverzahne Hohlräder ausgebildet sind. Es ist allerdings auch möglich, das Spannungswellengetriebe als sog. Innenläufer auszubilden, bei dem der Flexspline eine Innenverzahnung und die mit ihm in Zahneingriff stehenden Zahnräder eine Außenverzahnung aufweisen.

Bei einer ganz besonders vorteilhaften Ausführung, die vorteilhaft insbesondere für eine Verstellvorrichtung verwendet werden kann, ist das Spannungswellengetriebe derart ausgebildet, dass der zweite Getriebeantrieb und der Getriebeabtrieb ausschließlich in einem begrenzten Winkelbereich relativ zueinander rotierbar sind und/oder dass eine Relativdrehung des ersten und des zweiten Zahnrades ausschließlich in einem begrenzten Winkelbereich möglich ist. Auf diese Weise wird vorteilhaft erreicht, dass ein vorgegebener Verstellbereich nicht verlassen werden kann. Beispielsweise in Bezug auf einen Nockenwellenversteller kann so gewährleistet werden, dass keine Ventilsteuerzeiten einstellbar sind, die für den Betrieb eines Verbrennungsmotors nicht vorgesehen sind oder bei denen es gar zu einer Beschädigung des Verbrennungsmotors kommen könnte.

Beispielsweise kann vorteilhaft vorgesehen sein, dass der Durchbruch so groß ausgebildet ist, dass eine Relativdrehung der Getriebebauteile, insbesondere der mit dem Flexspline in Zahneingriff stehenden Zahnräder, in dem begrenzten Winkelbereich möglich ist.

Der Begriff "Getriebebauteil" wird in diesem Zusammenhang als Oberbegriff für jedes der Bauteile verwendet, die zum Spannungswellengetriebe gehören und zu seiner Funktion beitragen. Beispielsweise sind insbesondere der Wellengenerator, der Flexspline, die mit dem Flexspline in Zahneingriff stehenden Zahnräder, der erste Getriebeantrieb, der zweite Getriebeantrieb und der Getriebeabtrieb Getriebebauteile.

Ein begrenzter Winkelbereich kann beispielsweise dadurch realisiert sein, dass wenigsten ein Anschlag vorhanden ist, an die ein Getriebebauteil anschlägt, wenn eine Grenze des Winkelbereichs erreicht wird. Insbesondere kann vorteilhaft vorgesehen sein, dass wenigstens ein Anschlag ein Dämpfungselement, insbesondere einen Federdämpfer, einen Elastomerdämpfer, einen Öldruckdämpfer oder einen Gasdruckdämpfer, aufweist. Hierdurch können eine störende Geräuschentwicklung und ein frühzeitiger Verschleiß vermieden werden. Beispielsweise kann vorteilhaft vorgesehen sein, dass ein Anschlagsbauteil linear beweglich in einer Ausgangsposition gehaltert ist, das im Falle eines Anschlagens gegen die Rückstellkraft einer Feder oder eines unter Druck stehendes Fluids, insbesondere Öl oder Gas, zunächst aus der Ausgangsposition heraus bewegt wird und anschließend durch die Rückstellkraft in die Ausgangslage zurück kehrt.

Bei einer ganz besonders kompakt und robust ausführbaren Ausführung ist im Hinblick auf die Realisierung eines begrenzten Winkelbereichs vorgesehen, dass zwei ansonsten zueinander bewegliche, insbesondere rotierbare, Getriebebauteile bei Erreichen der Grenzen des Winkelbereichs aneinander anschlagen. Hierzu kann vorteilhaft beispielsweise vorgesehen sein, dass eines der Getriebebauteile das erste Zahnrad ist und/oder dass eines der Getriebebauteile das zweite Zahnrad ist. Es ist beispielsweise auch möglich eines der Getriebebauteile drehfest mit dem ersten Zahnrad verbunden ist und/oder dass das andere Getriebebauteil drehfest mit dem zweiten Zahnrad verbunden ist.

Ein mechanischer Anschlag zur Begrenzung des Winkelbereichs kann vorteilhaft beispielsweise durch einen Randabschnitt des Durchbruchs gebildet sein. Ganz allgemein kann vorteilhaft vorgesehen sein, dass ein mechanischer Anschlag durch einen Randabschnitt einer Ausnehmung in einem der Getriebebauteile gebildet ist, in die das andere Getriebebauteil ragt oder durch den hindurch das andere Getriebebauteil verläuft. Die Ausnehmung kann insbesondere durch den Durchbruch realisiert sein. Es ist jedoch auch möglich, dass die Ausnehmung, beispielsweise in Form eines Langlochs oder einer länglichen Nut, zusätzlich zu dem Durchbruch vorhanden ist.

Für viele Anwendungen ist es im Hinblick auf eine kompakte Ausführbarkeit von Vorteil, wenn der erste Getriebeantrieb auf der dem Getriebeabtrieb abgewandten Seite des Getriebes angeordnet ist. Allerdings sind auch andere Anordnungen möglich.

Bei einer ganz besonders vorteilhaften Ausführung ist der Wellengenerator in Leichtbauweise hergestellt. Beispielsweise kann dies vorteilhaft in der Weise realisiert sein, dass der Lagersitz für ein radialflexibles Wälzlager des Wellengenerators aus hochfestem Material, insbesondere Stahl, hergestellt ist, während der Rest des Wellengenerators aus einem Leichtbauwerkstoff, insbesondere aus Aluminium, hergestellt ist. Eine solche Ausführung vermeidet eine übermäßige Belastung des Spannungswellengetriebes bei Erreichen eines den Verstellbereich begrenzenden Anschlages. Bei Erreichen eines Anschlages eines Getriebebauteils, wird der Wellengenerator abrupt blockiert, wobei es auf Grund der Massenträgheit des Wellengenerators zu einer hohen Belastung des Spannungswellengetriebes und insbesondere zu einem Überratschen des Zahneingriffs kommen kann. Die Massenträgheit kann durch die erwähnte Leichtbauweise vorteilhaft reduziert werden. Ganz besonders vorteilhaft ist, wie bereits erwähnt, eine Verstellvorrichtung, die ein erfindungsgemäßes Spannungswellengetriebe und einen Verstellmotor aufweist, wobei der Verstellmotor triebtechnisch mit dem ersten Getriebeantrieb verbunden ist.

Wie bereits erwähnt, kann die Verstellvorrichtung vorteilhaft beispielsweise als Nockenwellenversteller für einen Verbrennungsmotor ausgebildet sein. Hierbei kann insbesondere vorgesehen sein, dass der zweite Getriebeantrieb dazu ausgebildet und bestimmt ist, insbesondere über einen Riementrieb oder einen Kettentrieb, an eine Kurbelwelle eines Verbrennungsmotors angekoppelt zu werden und dass der Getriebeabtrieb dazu ausgebildet und bestimmt ist, drehfest mit einer Nockenwelle, insbesondere einer Einlassnockenwelle oder einer Auslassnockenwelle, verkoppelt zu werden.

Die erfindungsgemäße Verstellvorrichtung kann beispielsweise als Vorrichtung zum Einstellen des Expansionshubes oder des Verdichtungsverhältnisses eines Verbrennungsmotors ausgebildet sein. Beispielsweise kann der Verbrennungsmotor eine Verstellwelle aufweisen, an die die Verstellvorrichtung angekoppelt wird. Die Drehstellung der Verstellwelle bestimmt die Größe des Expansionshubes oder des Verdichtungsverhältnisses des Verbrennungsmotors. Beispielsweise kann der Verbrennungsmotor zum Verstellen des Expansionshubes oder des Verdichtungsverhältnisses einen Mehrgelenkskurbeltrieb mit einer Exzenterwelle aufweisen.

Das Spannungswellengetriebe der Verstellvorrichtung arbeitet vorzugsweise als Überlagerungsgetriebe in der Weise, dass die über den zweiten Getriebeantrieb eingekoppelte Rotationsbewegung, insbesondere ohne Über- oder Untersetzung, also 1:1, auf den Getriebeabtrieb übertragen wird, solange der erste Getriebeeingang eine Rotationsbewegung derselben Drehzahl ausführt, und dass ein Phasenversatz der Rotationsbewegung am zweiten Getriebeantrieb relativ zu der Rotationsbewegung am Getriebeabtrieb erreicht wird, wenn am ersten Getriebeeingang kurzeitig die Drehzahl geändert wird.

Bei einer ganz besonders vorteilhaften Ausführung einer Verstellvorrichtung weist die Verstellvorrichtung eine Rückstellvorrichtung auf, die einen mechanischen Energiespeicher beinhaltet und die bei einem Ausfall und/oder nach einem Abschalten des Verstellmotors eine vorbestimmte Einstellung des Spannungswellengetriebes einstellt.

Die Verstellvorrichtung kann, wie bereits erwähnt, beispielsweise als Nockenwellenversteller ausgebildet sein, der es ermöglicht, den Ventilöffnungszeitpunkt eines Verbrennungsmotors drehzahlabhängig zu verändern und insbesondere bei steigender Drehzahl des Verbrennungsmotors vorzuverlegen. Hierbei wird mittels der Rückstellvorrichtung gewährleistet, dass bei einem Ausfall und/oder nach einem Abschalten des Verstellmotors automatisch eine vorbestimmte Einstellung des Spannungswellengetriebes und damit eine vorbestimmte Ventilöffnungszeitpunkteinstellung eingestellt wird. Beispielsweise ließe sich sonst ein Verbrennungsmotor, der mit einer für höhere Drehzahlen vorverlegten Ventilöffnungszeitpunkteinstellung abgeschaltet wurde, gar nicht oder nur sehr schwierig starten.

Hierbei muss gewährleitet sein, dass die Rückstellvorrichtung im Bedarfsfall ein ausreichend großes Drehmoment aufbringen kann, um das Spannungswellengetriebe und den Verstellmotor zurücktreiben zu können. Die Erfindung ist diesbezüglich besonders vorteilhaft, weil es vielfältige besondere Anordnungen des mechanischen Energiespeichers ermöglicht. Insbesondere ist es beispielsweise möglich, den mechanischen Energiespeicher auf der dem Getriebeabtrieb abgewandten Seite des Spannungswellengetriebes anzuordnen, wenn dort mehr freier Bauraum für den mechanischen Energiespeicher zur Verfügung steht, wie dies zumeist bei Nockenwellenantriebssystemen der Fall ist. Beispielsweise kann der mechanische Energiespeicher, beispielsweise in Form einer Feder und insbesondere einer Spiralfeder, so besonders ausgebildet werden, ohne dass andere Bauteile der Verstellvorrichtung und insbesondere des Spannungswellengetriebes, kompliziert ausgebildet oder unnötig groß gestaltet werden müssen.

Für eine besonders kompakte Bauweise ist es möglich, dass der mechanische Energiespeicher radial kleiner ist, als der Kopfkreisdurchmesser eines als Antriebszahnrad ausgebildeten zweiten Getriebeeinganges und/oder kleiner als der Außendurchmesser des ersten oder zweiten Zahnrades.

Bei einer besonderen Ausbildung der erfindungsgemäßen Verstellvorrichtung ist der mechanische Energiespeicher räumlich zwischen dem Spannungswellengetriebe und dem Verstellmotor angeordnet. Eine solche Anordnung hat den besonderen Vorteil, dass einerseits viel Bauraum für den mechanischen Energiespeicher zur Verfügung steht und andererseits eine direkte und unkomplizierte Anbindung an das Spannungswellengetriebe realisiert werden kann.

Ganz allgemein kann es vorteilhaft so sein, dass eine der Grenzen des Winkelbereichs, in dem der zweite Getriebeantrieb und der Getriebeabtrieb und/oder das erste und das zweite Zahnrad ausschließlich relativ zueinander rotierbar sind, die vorbestimmte Einstellung definiert, die die Rückstellvorrichtung bei einem Ausfall und/oder nach einem Abschalten des Verstellmotors einstellt. Bei einer solchen Ausführung kann die Verstellvorrichtung vorteilhaft in der Weise ausgebildet sein, dass die Rückstellvorrichtung zum Einstellen der vorbestimmten Einstellung das Spannungswellengetriebe bei einem Ausfall und/oder nach einem Abschalten des Verstellmotors so lange zurücktreibt, bis ein Getriebebauteil einen Anschlag erreicht und so ein weiteres Zurücktreiben verhindert.

Wie bereits erwähnt, kann der mechanische Energiespeicher eine Feder aufweisen oder als Feder ausgebildet sein. Insbesondere kann der mechanische Energiespeicher eine als Spiralfeder ausgebildete Feder aufweisen. Eine solche Ausführung ist insbesondere dann besonders vorteilhaft, wenn sich die Spiralfeder einerseits an dem Getriebeantrieb oder dem Wellengenerator und andererseits an einem mit dem radialflexiblen Flexspline in Zahneingriff stehenden Zahnrad abstützt. In einem solchen Fall erfolgt das Zurücktreiben an der schnellen Getriebeseite, so dass zumeist mehrere Umdrehungen des ersten Getriebeantriebs erforderlich sind, bis die vorbestimmte Einstellung des Spannungswellengetriebes eingestellt ist. Dies kann mit einer als Spiralfeder ausgebildeten Feder besonders zuverlässig realisiert werden.

Die Feder kann, insbesondere auch in Form einer Spiralfeder, als Flachspiralfeder ausgebildet sein. Bei einer ganz besonders vorteilhaften Ausführung weist der mechanische Energiespeicher eine Flachspiralfeder mit einer Windungszahl zwischen 1 und 50, insbesondere 10 bis 40 oder 20 bis 30, auf.

Alternativ oder zusätzlich kann vorteilhaft vorgesehen sein, dass der mechanische Energiespeicher eine Feder aufweist, die aus einem Material mit rechteckigem Materialquerschnitt hergestellt ist. Es ist allerdings auch möglich, dass der mechanische Energiespeicher eine Feder aufweist, die aus einem Material mit kreisrundem Materialquerschnitt hergestellt ist.

Die Ankopplung des mechanischen Energiespeichers kann kraftschlüssig, beispielsweise mittels Schrauben oder Nieten, oder formschlüssig, beispielsweise durch Einpressen, oder stoffschlüssig, beispielsweise mittels Schweißen oder Löten, realisiert sein. Bei einer besonderen Ausführung ist der mechanische Energiespeicher mittels wenigstens eines Zylinderstiftes an ein Getriebebauteil angekoppelt.

Bei einer ganz besonders vorteilhaften Ausführung ist wenigstens ein Ende der Feder zur Ankopplung an ein Getriebebauteil umgebogen und durch einen Getriebebauteil-Durchgang in dem Getriebebauteil geführt ist oder in eine Getriebebauteil-Ausnehmung des Getriebebauteils ragt. Insbesondere kann vorteilhaft vorgesehen sein, dass ein erstes Ende der Feder zur Ankopplung an ein erstes Getriebebauteil umgebogen und durch einen Getriebebauteil-Durchgang in dem ersten Getriebebauteil geführt ist oder in eine Getriebebauteil-Ausnehmung des ersten Getriebebauteils ragt und dass ein zweites Ende der Feder zur Ankopplung an ein zweites Getriebebauteil umgebogen und durch einen Getriebebauteil-Durchgang in dem zweiten Getriebebauteil geführt ist oder in eine Getriebebauteil-Ausnehmung des zweiten Getriebebauteils ragt. Diese Ausführung hat den besonderen Vorteil einer schnellen Montierbarkeit und Demontierbarkeit des mechanischen Energiespeichers, wobei dennoch gleichzeitig eine sichere und zuverlässige Ankopplung realisiert ist.

Hierbei kann in ganz besonders vorteilhafter Weise vorgesehen sein, dass ein sich an den umgebogenen Teil der Feder unmittelbar anschließender Abschnitt der Feder außerhalb der Getriebebauteil-Ausnehmung bzw. des Getriebebauteil-Durchgangs, insbesondere unmittelbar, an dem Getriebebauteil anliegt. Eine solche Ausführung hat den besonderen Vorteil, dass eine besonders sichere Verbindung realisiert wird, bei der ein Schwingen oder periodisches Anschlagen der Feder an das Getriebebauteil wirkungsvoll vermieden ist. Beispielsweise im Falle einer Ausbildung der Feder als Spiralfeder kann der an dem Getriebebauteil anliegende Abschnitt der Spiralfeder vorteilhaft einen dazugehörigen Polarwinkel im Bereich von 1 Grad bis 360 Grad, insbesondere im Bereich von 25 Grad bis 180 Grad, ganz insbesondere im Bereich von 45 Grad bis 90 Grad, aufweisen.

Alternativ zu einer Ausbildung als Feder aus einem elastischen Material kann der mechanische Energiespeicher beispielsweise als Gasdruckfeder ausgebildet sein.

Insbesondere im Hinblick auf eine gute Bauraumausnutzung kann der mechanische Energiespeicher vorteilhaft koaxial zu der Rotationsachse des Spannungswellengetriebes angeordnet sein. Eine solche Ausführung ermöglicht es insbesondere, die Verstellvorrichtung weitgehend rotationssymmetrisch ausbilden zu können.

Bei einer vorteilhaften Ausführung ist der mechanische Energiespeicher wenigstens teilweise von einem mit einem Getriebebauteil, beispielsweise dem Getriebeabtrieb oder dem ersten Getriebeantrieb oder dem zweiten Getriebeantrieb, drehfest verbundenen Gehäuse eingehaust. Eine solche Ausführung ist besonders vorteilhaft, weil der mechanische Energiespeicher durch das Gehäuse vor Beschädigung und Verschmutzung geschützt ist und das Gehäuse zusätzlich zur Wirkankopplung des mechanischen Energiespeichers an das Getriebe dient. Hierzu kann das Gehäuse einerseits mit dem mechanischen Energiespeicher, beispielsweise dem Ende einer Feder, und andererseits mit einem Getriebebauteil wirkverbunden sein. Das Gehäuse kann insbesondere mehrteilig ausgebildet sein und wenigstens ein erstes Gehäuseteil sowie ein zweites Gehäuseteil aufweisen.

Bei einer vorteilhaften Ausführung übt die Rückstellvorrichtung zum Einstellen der vorbestimmten Einstellung ein Drehmoment aus und stützt sich dabei einerseits an dem Getriebeantrieb oder dem Wellengenerator und andererseits direkt oder indirekt an einem von den beiden mit dem radialflexiblen Flexspline in Zahneingriff stehenden Zahnrädern ab. Eine solche Ausführung hat den besonderen Vorteil, dass zum Zurücktreiben nur ein geringes Drehmoment auf der Antriebsseite des Spannungswellengetriebes aufgebracht werden muss. Allerdings sind in der Regel mehrere Umdrehungen des ersten Getriebeantriebs erforderlich, bis die vorbestimmte Einstellung des Spannungswellengetriebes eingestellt ist. Dies kann mit einer als Spiralfeder ausgebildete Feder, ähnlich wie in einem Uhrwerk, besonders zuverlässig realisiert werden.

Es ist alternativ oder zusätzlich auch möglich, dass die Rückstellvorrichtung zum Einstellen der vorbestimmten Einstellung ein Drehmoment ausübt und sich dabei einerseits an dem ersten mit dem radialflexiblen Flexspline in Zahneingriff stehenden Zahnrad und andererseits an dem zweiten mit dem radialflexiblen Flexspline in Zahneingriff stehenden Zahnrad abstützt. Eine solche Ausführung hat den besonderen Vorteil, dass aufgrund des kleineren erforderlichen Federweges eine als mechanische Energiespeicher ausgebildete Feder, insbesondere Spiralfeder, besonders kompakt ausgebildet sein kann.

Hierbei kann im Hinblick auf eine kompakte und zuverlässige Bauweise vorteilhaft insbesondere vorgesehen sein, dass sich die Rückstellvorrichtung an dem mit dem radialflexiblen Flexspline in Zahneingriff stehenden Zahnrad abstützt, das drehfest mit dem zweiten Getriebeantrieb verbunden ist, und/oder dass sich die Rückstellvorrichtung an dem mit dem radialflexiblen Flexspline in Zahneingriff stehenden Zahnrad abstützt, das nicht drehfest mit dem Getriebeabtrieb verbunden ist.

Bei einer besonders zuverlässigen und fehlerunanfälligen Ausführung ist der Verstellmotor über eine Ausgleichsvorrichtung, insbesondere eine Oldham-Kupplung oder eine biegsame Welle, an den ersten Getriebeantrieb angekoppelt, wobei die Ausgleichsvorrichtung einen Achsversatz und/oder einen Winkelfehler zwischen dem Verstellmotorabtrieb und dem ersten Getriebeantrieb ausgleicht.

Ganz allgemein ist ein Verbrennungsmotor von besonderem Vorteil, der eine erfindungsgemäße Verstellvorrichtung aufweist. Der Verbrennungsmotor kann insbesondere ein Vortrieb erzeugender Antriebsmotor für ein Kraftfahrzeug, insbesondere für einen PKW oder einen LKW, sein.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: ein erstes Ausführungsbeispiel einer erfindungsgemäßen Verstellvorrichtung, die ein erfindungsgemäßes Spannungswellengetriebe beinhaltet.
- Fig. 2: eine Detailansicht des Spannungswellengetriebes und der Rückstellvorrichtung eines zweiten Ausführungsbeispiels einer erfindungsgemäßen Verstellvorrichtung,
- Fig. 3: eine weitere Detailansicht des Spannungswellengetriebes und der Rückstellvorrichtung des zweiten Ausführungsbeispiels einer erfindungsgemäßen Verstellvorrichtung,
- Fig. 4: eine Schnittdarstellung der in Figur 2 eingezeichneten Schnittebene,
- Fig. 5: eine Detaildarstellung des zweiten Ausführungsbeispiels bezüglich der Ankopplung eines Endes des mechanischen Energiespeichers,
- Fig. 6: eine Detaildarstellung des zweiten Ausführungsbeispiels bezüglich der Ankopplung des anderen Endes des mechanischen Energiespeichers,
- Fig. 7: eine Detailansicht des Spannungswellengetriebes und der Rückstellvorrichtung eines dritten Ausführungsbeispiels einer erfindungsgemäßen Verstellvorrichtung,
- Fig. 8: eine weitere Detailansicht des Spannungswellengetriebes und der Rückstellvorrichtung des dritten Ausführungsbeispiels einer erfindungsgemäßen Verstellvorrichtung, und
- Fig. 9: eine Schnittdarstellung der in Figur 2 eingezeichneten Schnittebene.

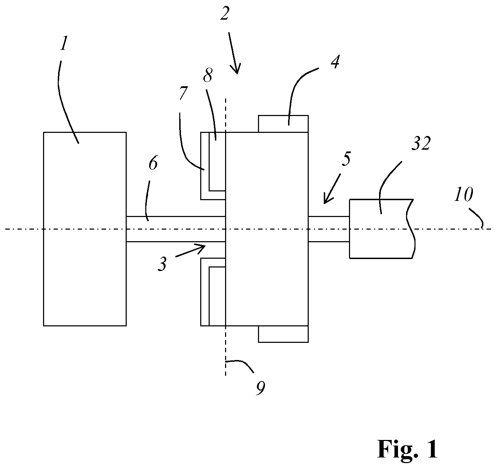

Fig. 1 zeigt schematisch ein Ausführungsbeispiel einer erfindungsgemäßen Verstellvorrichtung, die beispielsweise als ein Nockenwellenversteller ausgebildet sein kann. Die Verstellvorrichtung weist einen Verstellmotor 1 und ein erfindungsgemäßes Spannungswellengetriebe 2 auf.

Um die Gesamtanordnung der Verstellvorrichtung zu verdeutlichen und der besseren Übersichtlichkeit halber sind nicht alle Getriebebauteile des Spannungswellengetriebes 2 dargestellt. Insbesondere wurde in Figur 1 auf die Darstellung des Flexsplines 12, des Wellengenerators 11 und der mit dem Flexspline 12 in Zahneingriff stehenden Zahnräder 13, 14 verzichtet. Das Spannungswellengetriebe 2 beinhaltet einen ersten Getriebeantrieb 3, einen zweiten Getriebeantrieb 4 und einen Getriebeabtrieb 5, wobei der Verstellmotor 1 über eine Antriebswelle 6 triebtechnisch mit dem ersten Getriebeantrieb 3 verbunden ist. Der Getriebeabtrieb 5 ist drehfest mit einer Nockenwelle 32 verbunden.

Die Verstellvorrichtung weist außerdem eine Rückstellvorrichtung 7 auf, die einen mechanischen Energiespeicher 8 beinhaltet und die bei einem Ausfall und/oder nach einem Abschalten des Verstellmotors 1 eine vorbestimmte Einstellung des Spannungswellengetriebes 2 einstellt, wobei der mechanische Energiespeicher 8 auf der dem Getriebeabtrieb 5 abgewandten Seite des Spannungswellengetriebes 2 angeordnet ist.

Der mechanische Energiespeicher 8 ist räumlich zwischen dem Spannungswellengetriebe 2 und dem Verstellmotor 1 angeordnet.

Insbesondere ist der mechanische Energiespeicher 8 in einem von zwei Halbräumen angeordnet, die durch eine Ebene 9 senkrecht zur Rotationsachse 10 des Spannungswellengetriebes 2 voneinander getrennt sind, wobei sich das Spannungswellengetriebe 2 samt seinem Getriebeabtrieb 5 in dem anderen Halbraum befinden.

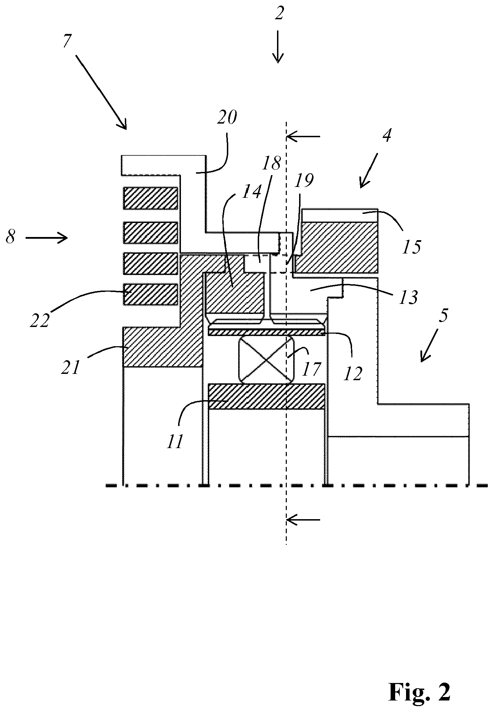

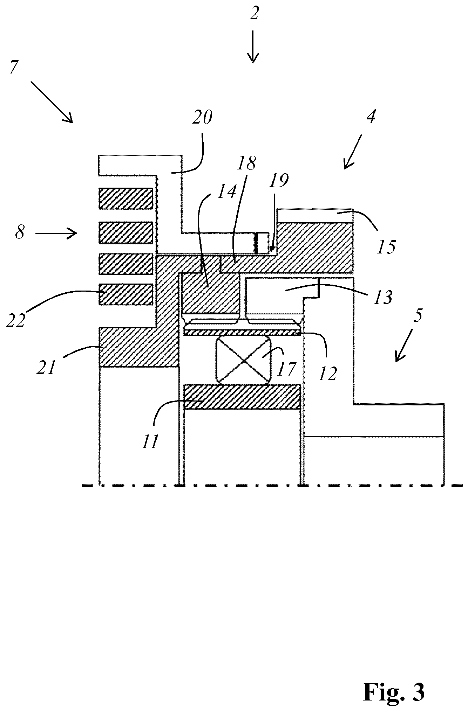

Die Figuren 2 und 3 zeigen in zueinander senkrechten Schnittebenen jeweils eine Detailansicht des Spannungswellengetriebes 2 und der Rückstellvorrichtung 7 eines zweiten Ausführungsbeispiels einer erfindungsgemäßen Verstellvorrichtung.

Bei diesem Ausführungsbeispiel weist das Spannungswellengetriebe 2 einen drehfest mit dem ersten Getriebeantrieb 3 verbundenen Wellengenerator 11, einen radialflexiblen und außenverzahnten Flexspline 12 sowie ein erstes innenverzahntes Zahnrad 13 und ein zweites innenverzahntes Zahnrad 14, die beide mit dem Flexspline 12 in Zahneingriff stehen, auf. Das erste Zahnrad 13 ist drehfest mit dem Getriebeabtrieb 5 verbunden, während das zweite Zahnrad 14 drehfest mit dem zweiten Getriebeantrieb 4 verbunden ist. Das erste Zahnrad 13 weist dieselbe Zähnezahl auf, wie der Flexspline 12, während das zweite Zahnrad 14 eine um zwei Zähne höhere Zähneanzahl aufweist als der Flexspline 12. Es ist allerdings auch möglich, dass das zweite Zahnrad 14 dieselbe Zähnezahl aufweist, wie der Flexspline 12, während das erste Zahnrad 14 eine andere Zähneanzahl aufweist.

Ein Verbindungsteil 18, das das zweite Zahnrad 14 mit dem zweiten Getriebeantrieb 4 verbindet, verläuft durch einen Durchbruch 19 in dem ersten Zahnrad 13 in einem Bereich, in dem dieses mit einem ersten Gehäuseteil 20 verbunden ist. Das erste Gehäuseteil 20 haust den als Spiralfeder 22 ausgebildeten mechanischen Energiespeicher 8 teilweise ein und dient außerdem der drehfesten Anbindung eines Endes der Spiralfeder 22 an das erste Zahnrad 13. Das andere Ende der Spiralfeder 22 ist über ein zweites Gehäuseteil 21 drehfest mit dem zweiten Zahnrad 14 verbunden. Das erste Gehäuseteil 20 und das zweite Gehäuseteil 21 sind Bestandteile eines den Energiespeicher 8 teilweise einhausenden Gehäuses.

Der Wellengenerator 11 ist mittels eines radialflexiblen Wälzlagers 17 rotierbar gelagert und drehfest mit dem ersten Getriebeantrieb 3 verbunden (in Figur 2 nicht dargestellt).

Der zweite Getriebeantrieb 4 weist eine Außenverzahnung 15 auf und ist dazu ausgebildet und bestimmt, über einen Kettentrieb an eine Kurbelwelle eines Verbrennungsmotors angekoppelt zu werden. Der Getriebeabtrieb 5 ist dazu ausgebildet und bestimmt, drehfest mit einer Nockenwelle, insbesondere einer Einlassnockenwelle oder einer Auslassnockenwelle eines Verbrennungsmotors, verkoppelt zu werden.

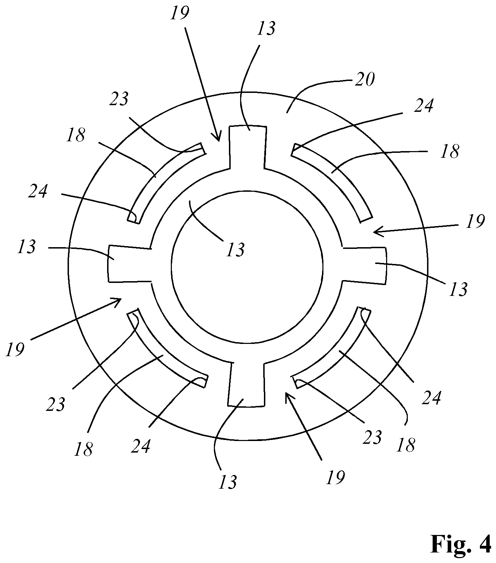

Ein Verstellvorgang wird dadurch bewirkt, dass der Wellengenerator 11 mittels des (in dieser Figur nicht dargestellten) Verstellmotors 1 in Rotation versetzt wird, wodurch eine Relativdrehung des ersten Zahnrades 13 zu dem zweiten Zahnrad 14 bewirkt wird. Die Spiralfeder 22 wird hierbei gespannt. Bei einem Ausfall und/oder nach einem Abschalten des Verstellmotors treibt die sich entspannende Spiralfeder 22 das Spannungswellengetriebe 2 zurück und bringt das erste Zahnrad 13 relativ zu dem zweiten Zahnrad 14 in eine vorbestimmte Einstellung zurück. Die vorbestimmte Einstellung ist erreicht, wenn das Verbindungsteil 18 an einem ersten Anschlag 23 des Durchbruchs 19 in dem ersten Zahnrad 13 anschlägt, was in Figur 4 dargestellt ist.

Das Spannungswellengetriebe 2 ist derart ausgebildet, dass der zweite Getriebeantrieb 4 und der Getriebeabtrieb 5 ausschließlich in einem begrenzten Winkelbereich relativ zueinander rotierbar sind, wobei eine der Grenzen des Winkelbereichs wie oben geschildert die vorbestimmte Einstellung definiert. Die andere Grenze des Winkelbereichs ist durch den entgegengesetzt angeordneten zweiten Anschlag 24 des Durchbruchs 19 definiert, was in Figur 4 dargestellt ist.

Figur 4 zeigt eine Schnittdarstellung der in Figur 2 eingezeichneten Schnittebene, wobei der besseren Übersichtlichkeit halber der Wellengenerator 11, das radialflexible Wälzlager 17 und der Flexspline 12 nicht eingezeichnet sind. Es ist zu erkennen, dass es insgesamt vier Verbindungsteile 18 gibt, die das zweite Zahnrad 14 mit dem zweiten Getriebeantrieb 4 verbinden und die durch jeweils einen Durchbruch 19 in dem ersten Zahnrad 13 verlaufen.

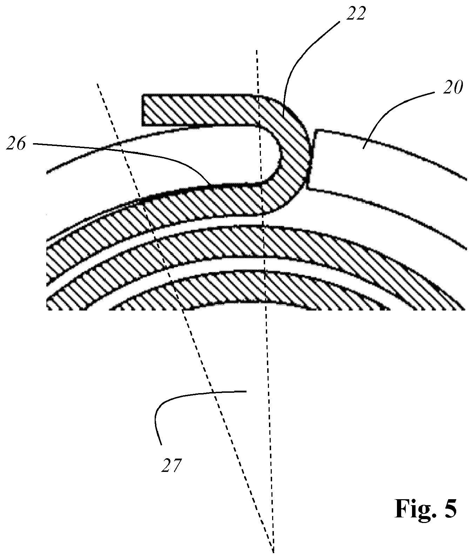

Figur 5 zeigt eine Detaildarstellung des zweiten Ausführungsbeispiels bezüglich der Ankopplung eines Endes der Spiralfeder 22 an das Gehäuseteil 20. Die Spiralfeder 22 ist durch einen Getriebebauteil-Durchgang 30 in dem Gehäuseteil 20 geführt und umgebogen.

Ein sich an den umgebogenen Teil der Spiralfeder 22 unmittelbar anschließender Abschnitt 26 der Spiralfeder 22 liegt außerhalb des Getriebebauteil-Durchgangs 30 unmittelbar an dem Gehäuseteil 20 an. Der Abschnitt 26 der Spiralfeder 22 weist einen dazugehörigen Polarwinkel 27 im Bereich von 25 Grad bis 180 Grad auf.

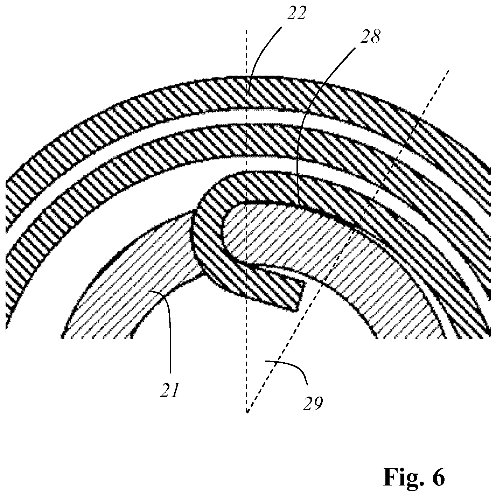

Figur 6 zeigt eine Detaildarstellung des zweiten Ausführungsbeispiels bezüglich der Ankopplung des anderen Endes der Spiralfeder 22 an das zweite Gehäuseteil 21. Die Spiralfeder 22 ist durch einen weiteren Getriebebauteil-Durchgang 31 in dem zweiten Getriebebauteil 21 geführt und umgebogen.

Ein sich an den umgebogenen Teil der Spiralfeder 22 unmittelbar anschließender Abschnitt 28 der Spiralfeder 22 liegt außerhalb des Getriebebauteil-Durchgangs 31 unmittelbar an dem zweiten Gehäuseteil 21 an. Der Abschnitt 28 der Spiralfeder 22 weist einen dazugehörigen Polarwinkel 29 im Bereich von 25 Grad bis 180 Grad auf.

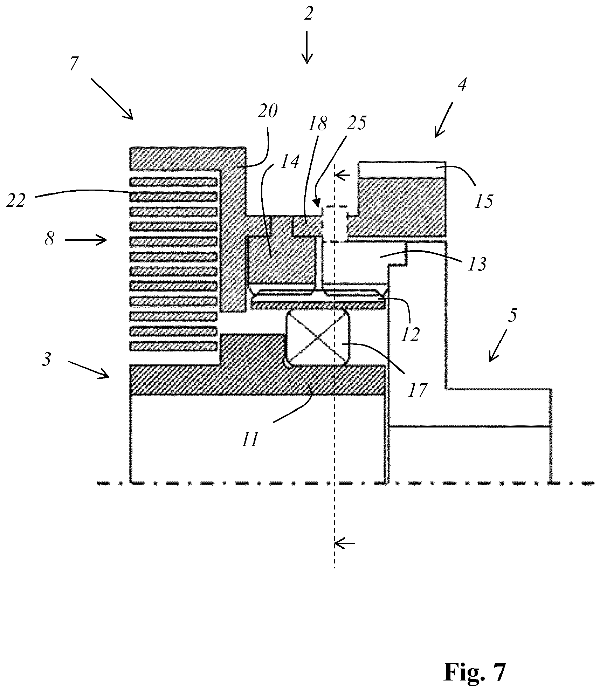

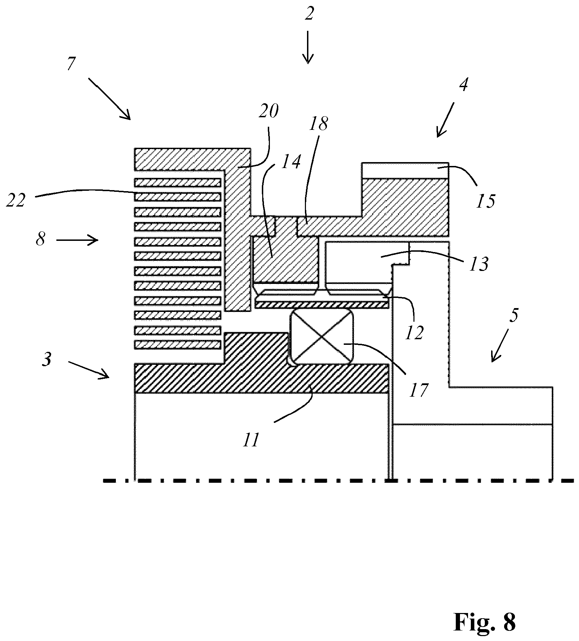

Die Figuren 7 und 8 zeigen in zueinander senkrechten Schnittebenen jeweils eine Detailansicht des Spannungswellengetriebes 2 und der Rückstellvorrichtung 7 eines dritten Ausführungsbeispiels einer erfindungsgemäßen Verstellvorrichtung.

Bei diesem Ausführungsbeispiel weist das Spannungswellengetriebe 2 einen drehfest mit dem Getriebeantrieb 3 verbundenen Wellengenerator 11, einen radialflexiblen und außenverzahnten Flexspline 12 sowie ein erstes innenverzahntes Zahnrad 13 und ein zweites innenverzahntes Zahnrad 14, die beide mit dem Flexspline 12 in Zahneingriff stehen, auf. Das erste Zahnrad 13 ist drehfest mit dem Getriebeabtrieb 5 verbunden, während das zweite Zahnrad 14 drehfest mit dem zweiten Getriebeantrieb 4 verbunden ist. Das erste Zahnrad 13 weist dieselbe Zähnezahl auf, wie der Flexspline 12, während das zweite Zahnrad 14 eine um zwei Zähne höhere Zähneanzahl aufweist als der Flexspline 12. Es ist allerdings auch möglich, dass das zweite Zahnrad 14 dieselbe Zähnezahl aufweist wie der Flexspline 12, während das erste Zahnrad 13 eine andere Zähneanzahl aufweist.

Der Wellengenerator 11 ist mittels eines radialflexiblen Wälzlagers 17 rotierbar gelagert und drehfest mit dem ersten Getriebeantrieb 3 verbunden.

Ein Verbindungsteil 18, das das zweite Zahnrad 14 mit dem zweiten Getriebeantrieb 4 verbindet, verläuft durch einen radial nach außen offenen Durchbruch 25 in dem ersten Zahnrad 13.

Das zweite Zahnrad 14 ist außerdem drehfest mit einem ersten Gehäuseteil 20 verbunden. Das erste Gehäuseteil 20 haust den als Spiralfeder 22 ausgebildeten mechanischen Energiespeicher 8 teilweise ein. Das andere Ende der Spiralfeder 22 ist drehfest mit dem ersten Getriebeantrieb 3 verbunden.

Der zweite Getriebeantrieb 4 weist eine Außenverzahnung 15 auf und ist dazu ausgebildet und bestimmt, über einen Kettentrieb an eine Kurbelwelle eines Verbrennungsmotors angekoppelt zu werden. Der Getriebeabtrieb 5 ist dazu ausgebildet und bestimmt, drehfest mit einer Nockenwelle, insbesondere einer Einlassnockenwelle oder einer Auslassnockenwelle eines Verbrennungsmotors, verkoppelt zu werden.

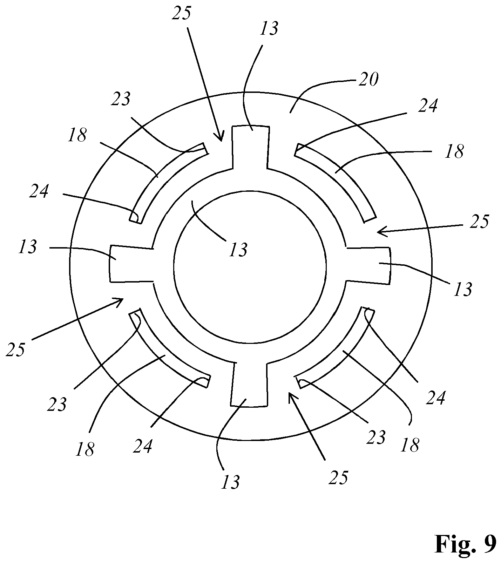

Ein Verstellvorgang wird dadurch bewirkt, dass der Wellengenerator 11 mittels des (in dieser Figur nicht dargestellten) Verstellmotors 1 in Rotation versetzt wird, wodurch eine Relativdrehung des ersten Zahnrades 13 zu dem zweiten Zahnrad 14 bewirkt wird und wodurch die Spiralfeder 22 gespannt wird. Bei einem Ausfall und/oder nach einem Abschalten des Verstellmotors versetzt die Spiralfeder 22 den Wellengenerator 11 mit umgekehrter Rotationsrichtung in Rotation und bringt das erste Zahnrad 13 relativ zu dem zweiten Zahnrad 14 in eine vorbestimmte Einstellung zurück. Die vorbestimmte Einstellung ist erreicht, wenn das Verbindungsteil 18 an einem ersten Anschlag 23 des Druchbruchs 25 in dem ersten Zahnrad 13 anschlägt, was in Figur 9 dargestellt ist.

Das Spannungswellengetriebe 2 ist derart ausgebildet, dass der zweite Getriebeantrieb 4 und der Getriebeabtrieb 5 ausschließlich in einem begrenzten Winkelbereich relativ zueinander rotierbar sind, wobei eine der Grenzen des Winkelbereichs wie oben geschildert die vorbestimmte Einstellung definiert. Die andere Grenze des Winkelbereichs ist durch den entgegengesetzt angeordneten zweiten Anschlag 24 der Ausnehmung 25 definiert, was in Figur 9 dargestellt ist.

Figur 9 zeigt eine Schnittdarstellung der in Figur 7 eingezeichneten Schnittebene, wobei der besseren Übersichtlichkeit halber der Wellengenerator 11, das radialflexible Wälzlager 17 und der Flexspline 12 nicht eingezeichnet sind. Es ist zu erkennen, dass es insgesamt vier Verbindungsteile 18 gibt, die das zweite Zahnrad 14 mit dem zweiten Getriebeantrieb 4 verbinden und die durch jeweils einen Durchbruch 25 in dem ersten Zahnrad 13 verlaufen. Die Zahl von vier Verbindungsteilen 18 ist vorteilhaft, jedoch nicht zwingend erforderlich. Es können auch mehr oder weniger Verbindungsteile 18 vorhanden sein.

Die Tatsache, dass Ausführungsbeispiele des erfindungsgemäßen Spannungswellengetriebes vorstehend beispielhaft in Bezug auf die Anwendung in Verstellvorrichtungen beschrieben werden bedeutet nicht, dass andere Anwendungen des erfindungsgemäßen Spannungswellengetriebes ausgeschlossen sind.

### Bezugszeichenliste:

- 1: Verstellmotor
- 2: Spannungswellengetriebe
- 3: erster Getriebeantrieb
- 4: zweiter Getriebeantrieb
- 5: Getriebeabtrieb
- 6: Antriebswelle
- 7: Rückstellvorrichtung
- 8: mechanischer Energiespeicher
- 9: Ebene senkrecht zur Rotationsachse 10
- 10: Rotationsachse
- 11: Wellengenerator
- 12: Flexspline
- 13: erstes innenverzahntes Zahnrad
- 14: zweites innenverzahntes Zahnrad
- 15: Außenverzahnung
- 16: Vorsprung
- 17: radialflexibles Wälzlager
- 18: Verbindungsteil
- 19: Durchbruch
- 20: erstes Gehäuseteil
- 21: zweites Gehäuseteil
- 22: Spiralfeder
- 23: erster Anschlag
- 24: zweiter Anschlag
- 25: Durchbruch
- 26: Abschnitt der Spiralfeder 22
- 27: Polarwinkel
- 28: Abschnitt der Spiralfeder 22
- 29: Polarwinkel
- 30: Getriebebauteil-Durchgang
- 31: Weiterer Getriebebauteil-Durchgang
- 32: Nockenwelle

## Patentansprüche

1. Spannungswellengetriebe (2), das als Ringgetriebe ausgebildet ist und das einen drehfest mit einem ersten Getriebeantrieb (3) verbundenen Wellengenerator (11), einen radialflexiblen Flexspline (12) sowie zwei mit dem Flexspline (12) in Zahneingriff stehende Zahnräder (13, 14) mit unterschiedlicher Zähnezahl aufweist, wobei ein erstes der Zahnräder (13, 14) drehfest mit einem Getriebeabtrieb (5) verbunden ist und ein zweites der Zahnräder (13, 14) drehfest mit einem zweiten Getriebeantrieb(4) verbunden ist, **dadurch gekennzeichnet, dass**
a. wenigstens ein erstes Verbindungsteil, das das erste Zahnrad (13) mit dem Getriebeabtrieb (5) verbindet, durch wenigstens einen Durchbruch (19) in dem zweiten Zahnrad (14) oder in einem zweiten Verbindungsteil, das das zweite Zahnrad (14) mit dem zweiten Getriebeantrieb (4) verbindet, oder in einem mit dem zweiten Zahnrad (14) drehfest verbundenen Bauteil hindurch verläuft, oder dass
b. wenigstens ein zweites Verbindungsteil, das das zweite Zahnrad (14) mit dem zweiten Getriebeantrieb (4) verbindet, durch wenigstens einen Durchbruch (19) in dem ersten Zahnrad (13) oder in einem ersten Verbindungsteil, das das erste Zahnrad (13) mit dem Getriebeabtrieb (5) verbindet, oder in einem mit dem ersten Zahnrad (13) drehfest verbundenen Bauteil hindurch verläuft.

2. Spannungswellengetriebe (2) nach Anspruch 1, **dadurch gekennzeichnet, dass** der Flexspline (12) eine Außenverzahnung aufweist und dass die mit dem Flexspline (12) in Zahneingriff stehenden Zahnräder (13, 14) als innenverzahne Hohlräder ausgebildet sind.

3. Spannungswellengetriebe (2) nach Anspruch 1 oder 2, **dadurch gekennzeichnet, dass**
a. der zweite Getriebeantrieb (4) und der Getriebeabtrieb (5) ausschließlich in einem begrenzten Winkelbereich relativ zueinander rotierbar sind, und/oder dass eine Relativdrehung des ersten und des zweiten Zahnrades (13, 14) ausschließlich in einem begrenzten Winkelbereich möglich ist, oder dass
b. der zweite Getriebeantrieb (4) und der Getriebeabtrieb (5) ausschließlich in einem begrenzten Winkelbereich relativ zueinander rotierbar sind, und/oder dass eine Relativdrehung des ersten und des zweiten Zahnrades (13, 14) ausschließlich in einem begrenzten Winkelbereich möglich ist, wobei der Durchbruch (19) so groß ist, dass eine Relativdrehung des ersten und des zweiten Zahnrades (13, 14) in dem begrenzten Winkelbereich möglich ist.

4. Spannungswellengetriebe (2) nach Anspruch 3, **dadurch gekennzeichnet, dass**
a. Anschläge (23, 24) vorhanden sind, an die ein Getriebebauteil anschlägt, wenn die Grenzen des Winkelbereichs erreicht werden, und/oder dass
b. Anschläge (23, 24) vorhanden sind, an die ein Getriebebauteil anschlägt, wenn die Grenzen des Winkelbereichs erreicht werden, wobei wenigstens ein Anschlag (23, 24) ein Dämpfungselement, insbesondere einen Federdämpfer, einen Elastomerdämpfer oder einen Öldruckdämpfer, aufweist, und/oder dass
c. Anschläge (23, 24) vorhanden sind, an die ein Getriebebauteil anschlägt, wenn die Grenzen des Winkelbereichs erreicht werden, wobei zwei ansonsten zueinander bewegliche, insbesondere rotierbare, Getriebebauteile bei Erreichen der vorbestimmten Einstellung aneinander anschlagen, und/oder dass
d. Anschläge (23, 24) vorhanden sind, an die ein Getriebebauteil anschlägt, wenn die Grenzen des Winkelbereichs erreicht werden, wobei zwei ansonsten zueinander bewegliche, insbesondere rotierbare, Getriebebauteile bei Erreichen der vorbestimmten Einstellung aneinander anschlagen und wobei eines der Getriebebauteile das erste Zahnrad (13) ist und/oder dass eines der Getriebebauteile das zweite Zahnrad (14) ist, und/oder dass
e. Anschläge (23, 24) vorhanden sind, an die ein Getriebebauteil anschlägt, wenn die Grenzen des Winkelbereichs erreicht werden, wobei zwei ansonsten zueinander bewegliche, insbesondere rotierbare, Getriebebauteile bei Erreichen der vorbestimmten Einstellung aneinander anschlagen und wobei eines der Getriebebauteile drehfest mit dem ersten Zahnrad (13) verbunden ist und/oder dass das andere Getriebebauteil drehfest mit dem zweiten Zahnrad (14) verbunden ist, und/oder dass
f. Anschläge (23, 24) vorhanden sind, an die ein Getriebebauteil anschlägt, wenn die Grenzen des Winkelbereichs erreicht werden, wobei ein mechanischer Anschlag durch einen Randabschnitt eines Durchbruchs in einem der Getriebebauteile gebildet ist, in den das andere Getriebebauteil ragt oder durch den hindurch das andere Getriebebauteil verläuft.

5. Spannungswellengetriebe (2) nach einem der Ansprüche 1 bis 4, **dadurch gekennzeichnet, dass**
a. der erste Getriebeantrieb (3) auf der dem Getriebeabtrieb (5) abgewandten Seite des Spannungswellengetriebes (2) angeordnet ist, und/oder dass
b. der Wellengenerator (11) in Leichtbauweise hergestellt ist und/oder dass der Lagersitz für ein radialflexibles Wälzlager (17) des Wellengenerators (11) aus hochfestem Material, insbesondere Stahl, hergestellt ist, während der Rest des Wellengenerators (11) aus einem Leichtbauwerkstoff, insbesondere aus Aluminium, hergestellt ist.

6. Verstellvorrichtung, insbesondere Nockenwellenversteller, beinhaltend einen Verstellmotor (1) und ein Spannungswellengetriebe (2) nach einem der Ansprüche 1 bis 5, wobei der Verstellmotor (1) triebtechnisch mit dem ersten Getriebeantrieb (3) verbunden ist.

7. Verstellvorrichtung nach Anspruch 6, **dadurch gekennzeichnet, dass**
a. eine Rückstellvorrichtung (7) vorhanden ist, die einen mechanischen Energiespeicher (8) beinhaltet und die bei einem Ausfall und/oder nach einem Abschalten des Verstellmotors (1) eine vorbestimmte Einstellung des Spannungswellengetriebes (2) einstellt, oder dass
b. eine Rückstellvorrichtung (7) vorhanden ist, die einen mechanischen Energiespeicher (8) beinhaltet und die bei einem Ausfall und/oder nach einem Abschalten des Verstellmotors (1) eine vorbestimmte Einstellung des Spannungswellengetriebes (2) einstellt, wobei der zweite Getriebeantrieb (4) und der Getriebeabtrieb (5) ausschließlich in einem begrenzten Winkelbereich relativ zueinander rotierbar sind, und/oder dass eine Relativdrehung des ersten und des zweiten Zahnrades (13, 14) ausschließlich in einem begrenzten Winkelbereich möglich ist und eine der Grenzen des Winkelbereichs die vorbestimmte Einstellung definiert, oder dass
c. eine Rückstellvorrichtung (7) vorhanden ist, die einen mechanischen Energiespeicher (8) beinhaltet und die bei einem Ausfall und/oder nach einem Abschalten des Verstellmotors (1) eine vorbestimmte Einstellung des Spannungswellengetriebes (2) einstellt, wobei der mechanische Energiespeicher auf der dem Getriebeabtrieb (5) abgewandten Seite des Spannungswellengetriebes (2) angeordnet ist, oder dass
d. eine Rückstellvorrichtung (7) vorhanden ist, die einen mechanischen Energiespeicher (8) beinhaltet und die bei einem Ausfall und/oder nach einem Abschalten des Verstellmotors (1) eine vorbestimmte Einstellung des Spannungswellengetriebes (2) einstellt, wobei der mechanische Energiespeicher räumlich zwischen dem Spannungswellengetriebe (2) und dem Verstellmotor (1) angeordnet ist.

8. Verstellvorrichtung nach Anspruch 7, **dadurch gekennzeichnet, dass** der mechanische Energiespeicher (8) eine Feder aufweist, oder dass der mechanische Energiespeicher (8) eine Spiralfeder (22) aufweist, oder dass der mechanische Energiespeicher (8) eine Flachspiralfeder aufweist, oder dass der mechanische Energiespeicher (8) eine Flachspiralfeder mit einer Windungszahl zwischen 1 und 50, insbesondere 10 bis 40 oder 20 bis 30, aufweist, oder dass der mechanische Energiespeicher (8) eine Feder aufweist, die aus einem Material mit rechteckigem Materialquerschnitt hergestellt ist, oder dass der mechanische Energiespeicher (8) eine Feder aufweist, die aus einem Material mit kreisrundem Materialquerschnitt hergestellt ist, oder dass der mechanische Energiespeicher (8) als Gasdruckfeder ausgebildet ist.

9. Verstellvorrichtung nach Anspruch 8, **dadurch gekennzeichnet, dass**
a. wenigstens ein Ende der Feder zur Ankopplung an ein Getriebebauteil umgebogen und durch einen Getriebebauteil-Durchgang in dem Getriebebauteil geführt ist oder in eine Getriebebauteil-Ausnehmung des Getriebebauteils ragt, oder dass
b. ein erstes Ende der Feder zur Ankopplung an ein erstes Getriebebauteil umgebogen und durch einen Getriebebauteil-Durchgang in dem ersten Getriebebauteil geführt ist oder in eine Getriebebauteil-Ausnehmung des ersten Getriebebauteils ragt und dass ein zweites Ende der Feder zur Ankopplung an ein zweites Getriebebauteil umgebogen und durch einen Durchgang in dem zweiten Getriebebauteil geführt ist oder in eine Getriebebauteil-Ausnehmung des zweiten Getriebebauteils ragt, oder dass
c. wenigstens ein Ende der Feder zur Ankopplung an ein Getriebebauteil umgebogen und durch einen Getriebebauteil-Durchgang in dem Getriebebauteil geführt ist oder in eine Getriebebauteil-Ausnehmung des Getriebebauteils ragt, wobei ein sich an den umgebogenen Teil der Feder unmittelbar anschließender Abschnitt der Feder außerhalb der Getriebebauteil-Ausnehmung bzw. des Getriebebauteil-Durchgangs, insbesondere unmittelbar, an dem Getriebebauteil anliegt.

10. Verstellvorrichtung nach einem der Ansprüche 7 bis 9, **dadurch gekennzeichnet, dass**
a. der mechanische Energiespeicher mittels wenigstens eines Zylinderstiftes an ein Getriebebauteil angekoppelt ist, und/oder dass
b. der mechanische Energiespeicher koaxial zu der Rotationsachse des Spannungswellengetriebes (2) angeordnet ist, und/oder dass
c. der mechanische Energiespeicher wenigstens teilweise von einem mit dem Getriebeabtrieb (5) drehfest verbundenen Gehäuseteil eingehaust ist.

11. Verstellvorrichtung nach einem der Ansprüche 7 bis 10, **dadurch gekennzeichnet, dass**
a. die Rückstellvorrichtung (7) zum Einstellen der vorbestimmten Einstellung ein Drehmoment ausübt und sich dabei einerseits an dem ersten Getriebeantrieb (3) oder dem Wellengenerator (11) und andererseits an dem ersten oder dem zweiten Zahnrad (13, 14) abstützt, oder dass
b. die Rückstellvorrichtung (7) zum Einstellen der vorbestimmten Einstellung ein Drehmoment ausübt und sich dabei einerseits an dem ersten Zahnrad (13) und andererseits an dem zweiten Zahnrad (14) abstützt, oder dass
c. sich die Rückstellvorrichtung (7) an dem mit dem radialflexiblen Flexspline (12) in Zahneingriff stehenden Zahnrad (13, 14) abstützt, das drehfest mit dem zweiten Getriebeantrieb (4) verbunden ist, und/oder dass sich die Rückstellvorrichtung (7) an dem mit dem radialflexiblen Flexspline (12) in Zahneingriff stehenden Zahnrad abstützt, das nicht drehfest mit dem Getriebeabtrieb (5) verbunden ist.

12. Verstellvorrichtung nach einem der Ansprüche 6 bis 11, **dadurch gekennzeichnet, dass** ein Verstellmotorabtrieb des Verstellmotors (1) über eine Ausgleichsvorrichtung, insbesondere eine Oldham-Kupplung, an den ersten Getriebeantrieb (3) angekoppelt ist, die einen Achsversatz und/oder einen Winkelfehler zwischen dem Verstellmotorabtrieb und dem ersten Getriebeantrieb (3) ausgleicht.

13. Verstellvorrichtung nach einem der Ansprüche 6 bis 12, **dadurch gekennzeichnet, dass**
a. die Verstellvorrichtung als Nockenwellenversteller ausgebildet ist, oder dass
b. die Verstellvorrichtung als Nockenwellenversteller ausgebildet ist, wobei der zweite Getriebeantrieb (4) dazu ausgebildet und bestimmt ist, insbesondere über einen Riementrieb oder einen Kettentrieb, an eine Kurbelwelle eines Verbrennungsmotors angekoppelt zu werden und dass der Getriebeabtrieb (5) dazu ausgebildet und bestimmt ist, drehfest mit einer Nockenwelle, insbesondere einer Einlassnockenwelle oder einer Auslassnockenwelle, verkoppelt zu werden.

14. Verstellvorrichtung nach einem der Ansprüche 6 bis 12, **dadurch gekennzeichnet, dass** die Verstellvorrichtung als Vorrichtung zum Einstellen des Expansionshubes oder des Verdichtungsverhältnisses eines Verbrennungsmotors ausgebildet ist.

15. Verbrennungsmotor mit einem Spannungswellengetriebe (2) nach einem der Ansprüche 1 bis 5 oder mit einer Verstellvorrichtung nach einem der Ansprüche 6 bis 14.
